(19) **Europäisches Patentamt European Patent Office Office européen des brevets**

(11) **EP 4 224 670 B1**

(12) **EUROPEAN PATENT SPECIFICATION**

(45) Date of publication and mention
of the grant of the patent:
**14.05.2025 Bulletin 2025/20**

(21) Application number: **21874933.1**

(22) Date of filing: **13.08.2021**

(51) International Patent Classification (IPC):
*H02J 13/00* (2006.01)     *G06Q 50/06* (2024.01)
*H02J 3/00* (2006.01)      *H02J 3/14* (2006.01)

(52) Cooperative Patent Classification (CPC):
**G06Q 10/04; G06Q 30/0202; G06Q 30/0206;
G06Q 30/04; G06Q 50/06; H02J 3/14;** H02J 3/003;
H02J 2310/60; Y04S 10/50

(86) International application number:
**PCT/JP2021/029819**

(87) International publication number:
**WO 2022/070630 (07.04.2022 Gazette 2022/14)**

(54) **POWER CONTROL SYSTEM AND PROGRAM**

LEISTUNGSSTEUERUNGSSYSTEM UND -PROGRAMM

SYSTÈME ET PROGRAMME DE COMMANDE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2020 JP 2020165449**

(43) Date of publication of application:
**09.08.2023 Bulletin 2023/32**

(73) Proprietor: **Daikin Industries, Ltd.
Osaka-shi, Osaka 530-0001 (JP)**

(72) Inventors:
• **NAKAGAWA, Yoshihiro**
**Osaka-shi, Osaka 5300001 (JP)**
• **FURUI, Shuji**
**Osaka-shi, Osaka 5300001 (JP)**
• **NAKAO, Takuya**
**Osaka-shi, Osaka 5300001 (JP)**

(74) Representative: **Hoffmann Eitle
Patent- und Rechtsanwälte PartmbB
Arabellastraße 30
81925 München (DE)**

(56) References cited:
JP-A- 2003 023 729      JP-A- 2013 046 451
JP-A- 2015 204 698      JP-A- 2019 110 742
US-A1- 2017 070 089      US-A1- 2019 155 227

**Description**

Technical Field

The present disclosure relates to a power control system and a program.

Background Art

JP 2019-030087 A describes a power control system including a plurality of grouped consumers including a power meter that measures power consumption consumed by a load, and a control device that accepts power consumption measured by the power meter from each of the consumers, outputs group power consumption on a group-by-group basis by using the power consumption of each of the consumers, and performs control such that, when group power consumption of any group exceeds a group contract power set in advance for each group, the group power consumption of a power-exceeding group becomes equal to or less than the group contract power.

US 2017/0 070 089 A1 relates to a power system with an electricity storage unit that is controlled by a management device. US 2019/0 155 227 A1 relates to an energy management system with a demand/supply plan.

Summary of Invention

Technical Problem

Power supplied to a plurality of facilities is appropriately distributed to equipment devices installed in each facility by preferably predicting the power usage per equipment device with high accuracy.

It is an object of the present disclosure to control the power usage by a plurality of facilities such that information related to the power usage is acquired from equipment devices and the power usage per equipment device is accurately predicted based on the acquired information. Solution to Problem

The subject-matter of the independent claims solves the above technical problem. The dependent claims relate to further preferred embodiments, and this description explains how the present invention may be carried out.

A power control system of the present disclosure is a power control system for performing power control such that a total power usage of a plurality of facilities satisfies a predetermined power usage condition, the power control system including an acquisition unit that acquires information on power usages by equipment devices installed in the facilities; a prediction unit that predicts power usages of the facilities in which the equipment devices are installed, based on the information on the power usages by the equipment devices; and a control unit that controls the total power usage of the plurality of facilities, based on the power usages of the facilities predicted by the prediction unit.

This configuration makes it possible to control the power usage by a plurality of facilities such that information related to the power usage is acquired from equipment devices and the power usage per equipment device is accurately predicted based on the acquired information.

The prediction unit may predict the power usages of the facilities, based on, in addition to a power usage by each of the equipment devices installed in the facilities, an actual result of the power usages of the facilities over a past specific period.

This configuration makes it possible to accurately control the power usage of the plurality of facilities, based on the actual result of the power usage per facility over a past specific period.

Further, the prediction unit may predict the total power usage of the plurality of facilities, based on the power usages of the facilities predicted by the prediction unit, and the control unit may set a limit value for a power usage of each of the plurality of facilities based on a prediction result of the total power usage, and control each equipment device in each facility such that the set limit value is not exceeded.

This configuration makes it possible to appropriately allocate power usage to each facility while performing control such that the total power usage of a plurality of facilities belonging to a group does not exceed the contract power of the group.

Further, when a prediction result of a power usage of at least one facility among the power usages of the facilities predicted by the prediction unit is lower than a predetermined lower-limit threshold, the control unit may control load of a facility for which a prediction result of a power usage is predicted to be lower than the lower-limit threshold, such that the power usage of the facility is equal to or higher than a predetermined lower limit.

This configuration ensures that a facility to which less power is set to be allocated for a certain time period when a limit value is set by a specific method can use power over the time period.

Further, when the total power usage of the plurality of facilities predicted by the prediction unit is smaller than a predetermined threshold by a certain amount or more, the control unit may control one or a plurality of the equipment devices installed in one or a plurality of the facilities such that a power usage is higher than a value predicted by the prediction unit within a range in which the total power usage of the plurality of facilities does not exceed the threshold.

With this configuration, power more than predicted power usage can be used in a facility, according to a condition, even when a limit value for power usage is set for each facility.

Further, the prediction unit may predict a power usage of a facility based on a power usage of some equipment devices having a correlation with a power usage of an entire facility among the equipment devices installed in the facilities.

This configuration makes it possible to predict the power usage of a facility, based on the power usage of a specific equipment device, and to control the power usage of each equipment device installed in the facility.

A program of the present disclosure is a program for causing a computer that controls a power control system for performing power control such that a total power usage of a plurality of facilities satisfies a predetermined power usage condition, to function as an acquisition unit that acquires information on power usages by equipment devices installed in the facilities;

a prediction unit that predicts power usages of the facilities in which the equipment devices are installed, based on the information on the power usages by the equipment devices; and a control unit that controls the total power usage of the plurality of facilities, based on the power usages of the facilities predicted by the prediction unit.

A computer having installed therein the program makes it possible to accurately control the power usage of the plurality of facilities, based on the actual result of the power usage per facility over a past specific period.

Brief Description of Drawings

[Fig. 1] Fig. 1 is a diagram illustrating an overall configuration of a control system for equipment devices to which the present embodiment is applied.

[Fig. 2] Fig. 2 is a diagram illustrating a configuration of a server.

[Fig. 3] Fig. 3 is a diagram illustrating a configuration of a control device.

[Fig. 4] Fig. 4 is a diagram illustrating an example hardware configuration of the control device and the server.

[Fig. 5] Fig. 5 is a diagram illustrating a configuration of an equipment device.

[Fig. 6] Fig. 6 includes diagrams illustrating an example of predicted power usage of one consumer, in which Fig. 6(A) is a diagram illustrating an example of actual results of power usage in the past, Fig. 6(B) is a diagram illustrating prediction results of power usage over a day, and Fig. 6(C) is a diagram illustrating an example of predicted values for respective time periods in the prediction results.

[Fig. 7] Fig. 7 includes diagrams illustrating an example of adding up predicted power usage of a group including a plurality of consumers, in which Fig. 7(A) is a diagram illustrating example predictions for the respective consumers included in the group, Fig. 7(B) is a diagram illustrating prediction results of the entire group, and Fig. 7(C) is a diagram illustrating an example of predicted values for respective time periods in the prediction results of the group.

[Fig. 8] Fig. 8 includes diagrams illustrating an example of limit values set for respective consumers included in a group, in which Fig. 8(A) is a diagram illustrating an example of prediction of average power used by the group per time period, Fig. 8(B) is a diagram illustrating a result of allocation of limit values to the consumers included in the group, and Fig. 8(C) is a diagram illustrating an example of limit values allocated to one of the consumers included in the group for the respective time periods.

[Fig. 9] Fig. 9 is a diagram illustrating an example of a correlation between power usage of a facility and power usage of an air conditioner.

[Fig. 10] Fig. 10 is a diagram illustrating another example of a correlation between power usage of a facility and power usage of an air conditioner.

[Fig. 11] Fig. 11 is a diagram illustrating a method for predicting, in the example of the correlation illustrated in Fig. 10, the power usage of the facility based on the power usage of the air conditioner. Description of Embodiments

An embodiment will be described in detail hereinafter with reference to the accompanying drawings.

<System Configuration>

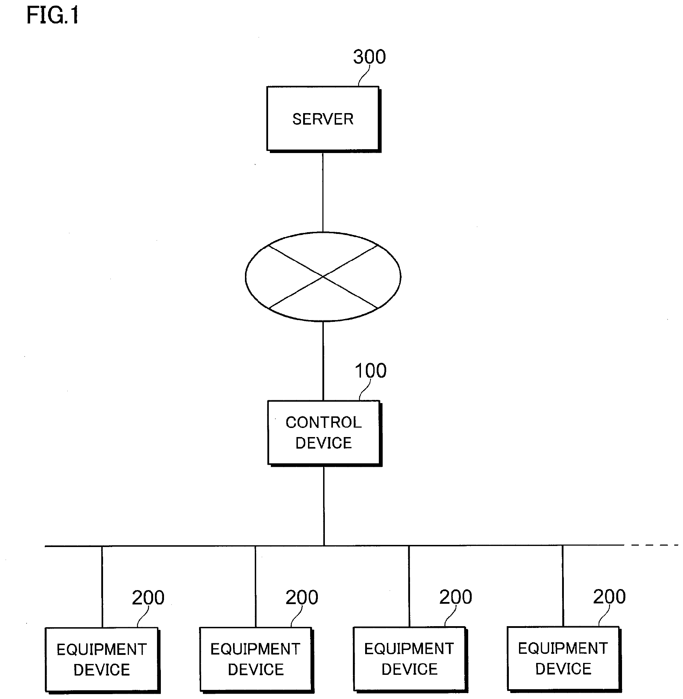

Fig. 1 is a diagram illustrating an overall configuration of a control system for equipment devices to which the present embodiment is applied. The control system according to the present embodiment includes a control device 100, an equipment device 200 that is a device to be controlled, and a server 300. The control device 100 and the equipment device 200 are connected to each other via a network. The network may be a LAN (Local Area Network) using a dedicated line, a WAN (Wide Area Network), a VPN (Virtual Private Network) set on the Internet, or the like.

The equipment device 200 is a piece of equipment or a device that operates using power. The control device 100 controls the operation of one or more equipment devices 200. Fig. 1 illustrates an example configuration in which the control device 100 controls a plurality of equipment devices 200. The equipment devices 200 may be of any type as long as the equipment devices 200 are pieces of equipment or devices that operate using power and whose operation is controlled by the control device 100. The following description may describe an example in which the control system of the present embodiment is applied to control of an air conditioner as a specific example of the equipment devices 200.

Each of the equipment devices 200 includes a control unit that controls the equipment device 200 in accordance with an instruction from the control device 100. The control device 100 generates an instruction (hereinafter referred to as a "control instruction") for controlling the equipment devices 200 to be controlled, and transmits the generated control instruction to each of the equipment devices 200. In each equipment device 200, the control instruction is acquired from the control device 100, and the control unit of the equipment device 200 performs setting of the equipment device 200 in accordance with the acquired control instruction and controls the operation.

The server 300 provides the control device 100 with control information for controlling the equipment devices 200. The server 300 is an example of a control information generation server. The control device 100 and the server 300 are connected to each other via a network. In the example configuration illustrated in Fig. 1, one control device 100 connected to the server 300 is illustrated. In actuality, a plurality of control devices 100 are connected to the server 300. Each control device 100 is connected to one or more equipment devices 200. The control device 100 and the server 300 are connected to each other via a network, examples of which include the Internet. A LAN or a WAN may be used instead.

<Relationship between Electricity Charges and Control of Equipment Devices 200>

Electricity charges will now be described. Electricity charges mainly include a base charge and a volume charge, and are specified on a monthly basis. Calculation of the base charge is based on the base charge unit price and the contract power. The contract power is set as the largest value of the maximum power demand over the past one year from the current month. The maximum power demand is the maximum value of monthly average power used per time period (demand time period: 30 minutes). The average power used is an average value of power demand (power usage) over each time period. Calculation of the volume charge is based on the volume charge unit price and the amount of power used per month.

As described above, the contract power is the largest value of the maximum power demand over the past one year. Accordingly, when the maximum power demand over a certain month (in other words, the average power used over a certain time period in the month) is the contract power, the base charge based on the contract power is charged over one year even if the maximum power demand is kept lower than the contract power after the month. When the average power used over a certain time period exceeds the value of the contract power so far and becomes equal to the maximum power demand for the month including the time period, the average power used (maximum power demand) over the time period is used as new contract power for the calculation of the base charge thereafter.

The volume charge unit price is set in various ways. The volume charge unit price may be set to vary under a predetermined condition. For example, the volume charge unit price may be set to vary by time of day, by weekday or weekend, by season, or the like. Due to the trading of electric power in the market, the volume charge unit price may be set to vary to reflect the trading price of electric power in the market.

The equipment devices 200 may be controlled for a reduction in electricity charges required for the operation of the equipment devices 200. In this case, it is demanded to control the equipment devices 200 so that the average power used does not exceed the current contract power. In a case where the volume charge unit price varies, it is more efficient to reduce the amount of power used in a high-unit-price time period than to reduce the amount of power used in a low-unit-price time period, in terms of reduction in electricity charges. However, the volume charge unit price affects only the volume charge per time period, whereas the contract power affects the electricity charges for one year after the current month. Accordingly, control that takes into account average power used is given priority over control that takes into account fluctuations in volume charge unit price.

Electricity charges are charged to the subscribers supplied with electricity. In the present embodiment, the subscribers supplied with electricity are assumed to be a group including a plurality of consumers. Accordingly, the average power used is obtained as a total value of average power used by the plurality of consumers included in the group over each time period. The base charge is determined based on the maximum power demand (maximum value of monthly average power used per time period) per group.

The maximum power demand per group is usually less than the total sum of the maximum power demands of the consumers included in the group. This is because the time period in which the maximum power demand is obtained is generally different among the consumers included in the group. Thus, the base charge set for the group is lower than the total sum of the base charges set for the consumers included in the group in accordance with the respective maximum power demands.

Each group is assigned one or more control devices 100. The one or more control devices 100 perform control on the equipment devices 200 of the consumers included in the group in consideration of the average power used per predetermined unit time and the volume charge unit price in accordance with the electricity charges (the base charge and the volume charge) set per group. One control device 100 may be assigned to a plurality of groups. In this case, each equipment device 200 of each consumer belonging to the plurality of groups is controlled by one control device 100.

Each consumer possesses one or more equipment devices 200, and the control device 100 controls the equipment devices 200 of one or more consumers. A place where one or more equipment devices 200 are installed is referred to as a facility. However, one consumer does not always correspond to one control device 100, and one consumer does not always correspond to one facility. A plurality of equipment devices 200 possessed by one consumer may be controlled by a plurality of control devices 100, or equipment devices 200 possessed by a plurality of consumers may be controlled by one control device 100. Likewise, a plurality of equipment devices 200 possessed by one consumer may be installed in a plurality of facilities, or equipment devices 200 possessed by a plurality of consumers may be installed in one facility. Further, equipment devices 200 installed in one facility may be controlled by a plurality of control devices 100, or equipment devices 200 installed in a plurality of facilities may be controlled by one control device 100. In the following description, for simplicity, it is assumed that equipment devices 200 of one consumer are installed in one facility and one consumer is assigned one control device 100. Accordingly, it is assumed that one control device 100 corresponds to one facility, an equipment device 200 of each consumer that are installed in each facility are controlled by the control device 100 provided for the facility and corresponding to the consumer.

In some cases, a plurality of facilities may belong to one group. In other cases, one facility may correspond to a plurality of groups. In the former case, the equipment devices 200 of consumers included in one group are installed in a plurality of facilities. In the latter case, the equipment devices 200 of a plurality of consumers included in each of a plurality of groups are installed in one facility. A total value of average power used by one or more facilities in which the equipment devices 200 of each consumer included in one group are installed is referred to as total power usage of the facilities belonging to the group.

<Configuration of Server 300>

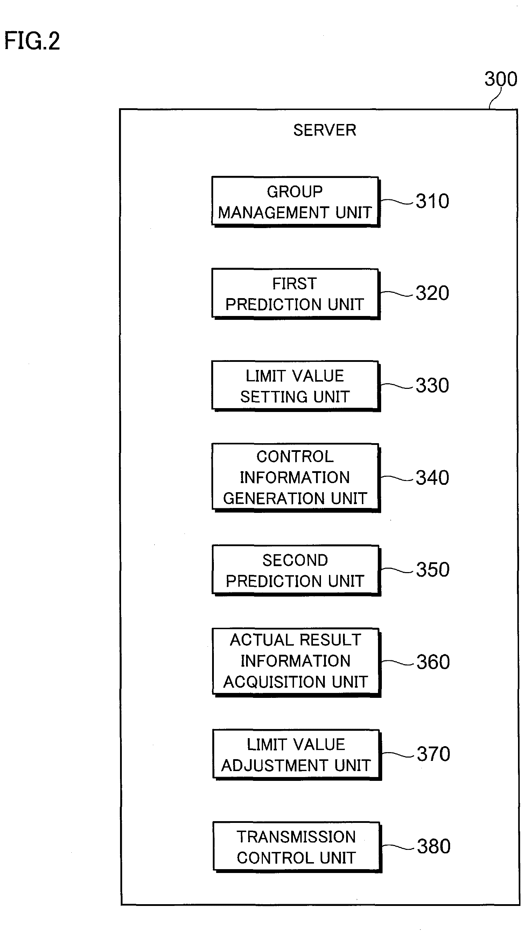

Fig. 2 is a diagram illustrating a configuration of the server 300. The server 300 is implemented as, for example, a server (so-called cloud server) constructed on a cloud environment of a network. The server 300 includes a group management unit 310, a first prediction unit 320, a limit value setting unit 330, a control information generation unit 340, a second prediction unit 350, an actual result information acquisition unit 360, a limit value adjustment unit 370, and a transmission control unit 380.

The group management unit 310 manages the group of consumers described above. As described above, the group is set as a unit of power contract. The group management unit 310 acquires and holds information on the contract power, the maximum power demand, and the average power used per time period of the group. The group management unit 310 further manages information on the consumers included in the group. The information on each consumer includes information on the equipment devices 200 of the consumer, information on the control device 100 in which the equipment devices 200 of the consumer are managed, information on a facility in which the equipment devices 200 of the consumer are installed, and the like. The group management unit 310 acquires and holds information on the contract power, the maximum power demand, and the average power used per time period of each of the consumers included in the group. The information on the average power used by each consumer is obtained from, for example, the control device 100 that controls the equipment devices 200 of the consumer. The information on the average power used by the group is obtained from, for example, the control device 100 that controls the equipment devices 200 of the consumers included in the group (hereinafter referred to as "equipment devices 200 of the group"). Specifically, for example, total average power used by the consumers included in the group over each time period is set as the average power used by the group.

The first prediction unit 320 predicts, for each of the consumers included in the group, the average power used by the equipment devices 200 of the consumer over each time period. The first prediction unit 320 is an example of a prediction unit. The average power used over each time period is predicted by the first prediction unit 320, based on, for example, history information regarding the operation of an equipment device 200 of each consumer in the group in the past. The history information regarding the operation includes a wide variety of information related to the operation of the equipment devices 200, such as information on the operating environment of the equipment devices 200, as well as information on the operating state of the equipment devices 200. The information on the operating state of the equipment devices 200 includes, for example, information such as the operating rate, the continuous operating time, and the number of times of operation. The information on the operating environment includes, for example, weather conditions such as weather, temperature, and humidity, and information such as a month, a day, and a time of day.

The average power used over a specific time period of a specific date and time (hereinafter referred to as "specific time period") may be predicted based on the average power used by the equipment device 200 over a reference time period relative to the specific time period. The reference time period is set based on, for example, history information regarding operation. The reference time period may be, for example, a past time period in which weather conditions are similar to weather conditions expected at the date and time to which the specific time period corresponds, or a corresponding time period of the same day of the same month a year ago. Alternatively, the average power used by the equipment device 200 over the specific time period may be predicted in consideration of the average power used by the equipment device 200 over time periods before and after the reference time period, the transition of the average power used by the equipment device 200 over time periods of several days until the day including the reference time period, or the like.

Further, the first prediction unit 320 predicts, based on a prediction result of the average power used by equipment devices 200 for each time period, the average power used in a facility in which each of the equipment devices 200 is installed over each time period. The average power used in each facility is obtained by totaling the average powers used by the equipment devices 200 installed in the facility over each time period. The average powers used in the facilities are added up to obtain total power usage of the facilities in each group.

Alternatively, as a method for predicting the average power used in a facility, the prediction may be performed based on the average power used by some equipment devices 200 having a correlation with the average power used in the facility in terms of the average power used for each time period among the equipment devices 200 installed in the facility. For example, the power usage of an equipment device 200 having a particularly large amount of power used among the equipment devices 200 installed in the facility is considered to have a strong correlation with the power usage of the facility. Accordingly, in the prediction of the average power used in the facility over a certain time period, the average power used by such a specific equipment device 200 over the corresponding time period is predicted. Based on the correlation between the power usage of the facility and the power usage of the specific equipment device 200, the power usage of the facility over the corresponding time period may be calculated.

The average power used by the equipment devices 200, which is used for the prediction of the average power used in the facility, may be predicted based on, for example, actual results of the average power used by the equipment devices 200 installed in the facility over a past specific period. The actual results of the average power used by the equipment devices 200 in the facility are obtained from history information regarding the operation of the equipment devices 200 for each facility. The specific period is desirably a period in which history information suitable for predicting the average power used by an equipment device can be obtained. For example, the specific period may be the past one year or several years.

The limit value setting unit 330 sets, for each of the consumers included in the group, a limit value for the average power used by the equipment devices 200 of the consumer over each time period, based on the result predicted by the first prediction unit 320. The limit value setting unit 330 is an example of a setting unit. If the average power used by the group exceeds the contract power of the group, the average power used is set as new contract power, resulting in an increase in the base charge of the electricity charges. Accordingly, it is demanded to set, for the group, target power based on the contract power and to perform control such that the average power used by the entire equipment devices 200 of the group over each time period does not exceed the target power. Further, the limit value for each time period is set for each consumer such that the total value of the limit values of the consumers is equal to or less than a threshold based on the target power. The target power is set to a value equal to or less than the contract power, for example, to a value lower than the contract power by a certain value. The threshold is set to a value equal to or less than the target power, for example, a value lower than the target power by a certain value.

The limit value of each of the consumers included in the group is set based on, for example, prediction of the average power used by the consumer, which is performed by the first prediction unit 320. From the prediction by the first prediction unit 320, the predicted proportion of the average power used by each consumer in the group is identified for each time period. For example, in a case where the total value of the limit values of the consumers is set to be equal to the threshold based on the target power described above, the average power used corresponding to the threshold is divided according to the proportions of the average power used by the respective consumers, which are predicted by the first prediction unit 320, to determine the limit values of the respective consumers. In other words, the limit value means the power usage available to each consumer for the time period.

Alternatively, the limit value may be set based on the actual value of the average power used per consumer per time period in a past specific period, instead of based on the proportion of the average power used per consumer predicted for each time period. For example, the proportion of the actual value of the average power used by each consumer over the reference time period described in the description of the prediction by the first prediction unit 320 to the specific time period described in the same description is identified. The proportion of the actual value may be used to set the limit value of each consumer for the specific time period. The specific period is determined in accordance with the amount of information obtained as the actual value of the reference time period. The specific period may be set as, for example, the past one year or several years, or a period from a specific month and day to a specific month and day.

Alternatively, the limit value may be set based on the maximum value of the average power used per consumer per time period in the specific period. For example, it is assumed that the specific period is set as the past one year. The maximum value of the average power used per time period in the past one year can be obtained for each consumer. Then, the maximum values of the respective consumers may be compared with each other, and the limit values of the respective consumers may be set in proportions according to the ratio. In this case, unlike the use of the actual value of the reference time period, the time period in which the average power used is the maximum value may be different for each consumer.

In a case where, for example, the total value of the limit values of the respective consumers for each time period is set to be equal to the threshold based on the target power described above, the limit value setting unit 330 may set the limit value of each consumer as follows. The limit value for a certain time period, which is set for each consumer, may be set to a higher value or a lower value than the limit value for the immediately preceding time period, depending on the consumer. Accordingly, the sum of the differences, for all the consumers for which the limit values are set to be higher than the limit values for the immediately preceding time period, between the limit values for the immediately preceding time period and the set limit values is compared with the sum of the differences, for all the consumers for which the limit values are set to be lower than the limit values for the immediately preceding time period, between the limit values for the immediately preceding time period and the set limit values. Then, the limit values of the consumers are set such that the former is not larger than the latter.

Further, a lower limit may be set as a limit value. The lower limit is a value greater than 0. Accordingly, in the prediction by the first prediction unit 320, even when the average power used by a certain consumer over a certain time period is predicted to be 0, the limit value corresponding to the lower limit is set. Such a limit value is set to avoid inconvenience that, in a case where the limit value is set to 0 for a time period in which the average power used by a certain consumer is predicted to be 0, the limit value is exceeded immediately when the consumer uses the equipment device 200 in the time period. The average power used may be predicted to be 0 when, for example, the average power used by the consumer over the reference time period, which is used for the prediction by the first prediction unit 320, is 0.

The method for setting the lower limit may be appropriately determined in accordance with, for example, the operation or specification of the control system, or agreement within the group, between the consumers, or the like. For example, a fixed value may be determined in advance. Alternatively, a value that varies based on a predicted value or the like of the average power used by the entire group over each time period may be used. When a fixed value is to be set as the lower limit, the same value may be set for the consumers, or a different value may be set for each consumer according to an appropriate condition or a request from the consumer. The predicted value of the average power used by the entire group per time period is obtained by adding up the predicted values of the average power used by the consumers included in the group per time period, which are obtained by the first prediction unit 320.

When a lower limit is to be set as a limit value, a lower-limit threshold may be set for the limit value, and the lower limit may be applied as the limit value when the limit value assigned to a certain consumer falls below the lower-limit threshold. A value different from the lower limit may be set as the lower-limit threshold. For example, a value lower than the lower limit is set as the lower-limit threshold. When the limit value assigned to a certain consumer falls below the lower-limit threshold in a certain time period, the lower limit, which is higher than the lower-limit threshold, is set as the limit value of the consumer for the time period.

When the lower limit described above is set as a limit value, a limit value different from (larger than) the value based on the proportion specified by the limit value setting method described above is assigned to some of the consumers included in the group. Accordingly, if the value given as the lower limit is simply added to the value calculated by the proportion according to the setting method described above to set the limit value of each consumer, the total value of the limit values of the respective consumers may exceed the threshold based on the target power described above. It is therefore desirable to perform correction such that, if there is a consumer for which the lower limit is applied to the limit value, the total value of the limit values of the respective consumers that take into account the lower limit does not exceed the threshold. It is conceivable to set the limit value of each consumer such that, for example, a value obtained by adding together the value calculated by the proportion according to the setting method described above and the applied lower limit is equal to or less than the threshold described above. It is also conceivable to subtract the total of the applied lower limits from the limit value of the consumer to which the lower limit is not applied.

A description has been made that a limit value is set for the average power used by an equipment device 200 of each consumer over each time period. Alternatively, a configuration may be used in which a limit value is set only for the average power used over a time period satisfying a specific condition. For example, the predicted values of the average power used by the consumers included in the group over a certain time period, which are obtained by the first prediction unit 320, are added up to obtain the predicted value of the average power used by the entire group for the time period. A limit value may be set only for the average power used over such a time period on condition that the predicted value of the average power used by the group exceeds the threshold.

In contrast, consideration will be given to a case where the predicted value of the average power used by the group falls below the threshold described above. The threshold is set based on the target power, and the target power is set based on the contract power. For this reason, if many consumers in the group do not use large power during a certain time period (e.g., a time period from midnight to dawn), the predicted value of the average power used by the group during the time period is considered to fall significantly below the threshold. In this case, the limit value of each of the consumers included in the group may be set to a value higher than the predicted value of the average power used by the consumer within a range in which the total value of the limit values of the respective consumers does not exceed the threshold.

In the example described above, a limit value is set for each consumer included in the group with respect to the average power used by the equipment devices 200 over each time period. A limit value may be set for each of facilities belonging to the group with respect to the average power used in the facility over each time period. In this case, the limit value for each facility for each time period is set such that the total power usage by all of the facilities belonging to the group is equal to or less than the threshold based on the target power of the group described above. The equipment devices 200 installed in each facility are controlled by the control device 100 associated with the facility such that the average power used by the equipment devices 200 over each time period does not exceed the limit value set for the facility.

Instead of setting of limit values for the average power used in the facility over all time periods, a limit value may be set only for the average power used over a time period satisfying a specific condition. For example, a predicted value of the total power usage of the facilities may be obtained based on predicted values of the average power used by consumers, which are obtained by the first prediction unit 320, and a limit value may be set only for the average power used per facility over such a time period on condition that the predicted value of the total power usage of the facilities exceeds the threshold described above.

When a limit value for each facility is set for the average power used per facility, a lower limit may be set for the limit value for each facility. The method for setting the lower limit may be appropriately determined in accordance with, for example, the operation or specification of the control system, the operation of each facility, or agreement between facilities. For example, a fixed value may be determined in advance. Alternatively, a value that varies based on a predicted value or the like of the total power usage of the facilities over each time period may be used. When a fixed value is to be set as the lower limit, the same value may be set for the facilities, or a different value may be set for each facility according to an appropriate condition, a request from the facility or a consumer having the equipment devices 200 installed in the facility, or the like.

When a lower limit is to be set as a limit value for the average power used by a facility, a lower-limit threshold may be set for the limit value, and the lower limit may be applied as the limit value when the limit value for a certain facility falls below the lower-limit threshold. A value different from the lower limit (for example, a value lower than the lower limit) may be set as the lower-limit threshold.

When the total power usage of the facilities belonging to the group over a certain time period significantly falls below the threshold based on the target power described above, the limit value for each facility may be set to a value higher than the predicted value of the average power used in each facility within a range in which the total power usage of the facilities belonging to the group does not exceed the threshold. The total power usage of the facilities may significantly fall below the threshold based on the target power, for example, on a day that the facilities are not open for business or for a period during which the facilities are closed.

The control information generation unit 340 generates control information for controlling an equipment device 200 of each of the consumers included in the group. The control information is information for causing the control device 100 to control the equipment devices 200 so that the average power used by the equipment devices 200 of the consumer over each time period does not exceed the limit value of the consumer for the time period, which is set by the limit value setting unit 330. Accordingly, the control information includes information on the limit value set by the limit value setting unit 330 for each consumer. Before the start of each time period in which control is performed using control information, the control information generation unit 340 generates control information for the time period. Alternatively, the control information generation unit 340 may generate control information for a plurality of time periods included in each predetermined unit period. Specifically, for example, the control information generation unit 340 may be configured to collectively generate control information for 48 time periods on a daily basis until the previous day.

When the limit value of each consumer, which is set by the limit value setting unit 330, is adjusted by the limit value adjustment unit 370, the control information generation unit 340 generates control information for reflecting the adjustment result of the limit value in the control of the equipment devices 200. When the control information based on the limit value set by the limit value setting unit 330 and the control information based on the limit value adjusted by the limit value adjustment unit 370 are hereinafter referred to as "general control information" and "individual control information", respectively, if they are distinguished from each other. As will be described in detail below, the limit value adjustment unit 370 adjusts the limit value within a time period during which control for reflecting the adjustment of the limit value is performed. Accordingly, unlike the general control information, the individual control information is generated within a time period during which control is performed using the individual control information, after the time period starts.

In a time period during which the equipment devices 200 are currently being controlled (hereinafter referred to as a "current time period"), the second prediction unit 350 predicts the average power used by the equipment devices 200 over the current time period. The average power used is predicted by the second prediction unit 350, based on, for example, information related to the operating status of an equipment device 200 of each consumer within the current time period. The information related to the operating status includes, for example, information such as the transition of the power usage of the equipment device 200 from the start of the current time period to the time point of prediction within the time period, the amount of power used, the state of operation, and the settings related to the operation. The settings related to the operation are specifically selected in accordance with the type of the equipment device 200. For example, when the equipment device 200 is an air conditioner, information such as a difference between a set temperature and an actual room temperature can be used.

The actual result information acquisition unit 360 acquires actual result information related to the operating status of an equipment device 200 of each of the consumers included in the group. Examples of the acquired actual result information include the above-described actual result information for the current time period (actual result information from the start of the current time period to the time point at which the actual result information is acquired), and actual result information for a time period that has already ended. The actual result information may be acquired from the control device 100 that controls the equipment device 200 or may be acquired from the equipment device 200 itself. The actual result information for the current time period, which is acquired by the actual result information acquisition unit 360, is used by the second prediction unit 350 for the prediction of the average power used by the equipment device 200. The actual result information related to the operating status of an equipment device 200, which is acquired by the actual result information acquisition unit 360, may be held as history information regarding the operation of the equipment device 200. The held history information may be used by the first prediction unit 320 for prediction. In this case, the actual result information acquisition unit 360 functions as an example of an acquisition unit.

The limit value adjustment unit 370 adjusts the limit values of the consumers included in the group, which are set by the limit value setting unit 330, based on a predetermined condition. As an example, the limit value adjustment unit 370 adjusts the limit value of each consumer based on the prediction by the second prediction unit 350. As another example, the limit value adjustment unit 370 adjusts the limit value of each consumer based on the actual result information related to the operating status of the equipment device 200 during the current time period, which is acquired by the actual result information acquisition unit 360. The limit values are adjusted such that the consumers included in the group interchange the power available to the consumers for use. For example, the limit values of some consumers among the consumers included in the group are decreased, and the limit values of the other consumers are increased by an amount corresponding to the decrease in the limit values of some consumers.

The transmission control unit 380 transmits the control information generated by the control information generation unit 340 to the control device 100 that controls the equipment device 200 of the consumer corresponding to the control information. Before the start of each time period in which control is performed using control information, the transmission control unit 380 transmits general control information for the time period to the control device 100. For example, the transmission control unit 380 may transmit general control information for one time period until the end of the time period immediately preceding the time period, or may transmit general control information for a plurality of consecutive time periods until the start of the first time period among the plurality of time periods. Alternatively, the transmission control unit 380 may transmit general control information for each predetermined unit period to the control device 100 before the start of the unit period. Specifically, for example, the transmission control unit 380 may transmit general control information for 48 time periods on a daily basis until the previous day.

Alternatively, the transmission control unit 380 may transmit general control information for each time period to the control device 100 such that general control information for decreasing the power usage over the time period from the power usage over the immediately preceding time period is transmitted earlier than general control information for increasing the power usage over the time period from the power usage over the immediately preceding time period.

Further, immediately after individual control information is generated, the transmission control unit 380 transmits the individual control information to the control device 100 that controls the equipment device 200 to be controlled using the generated individual control information. The transmission control unit 380 may transmit individual control information to the control device 100 such that individual control information of the equipment device 200 whose limit value is decreased by adjustment is transmitted earlier than individual control information of the equipment device 200 whose limit value is increased by adjustment.

<Configuration of Control Device 100>

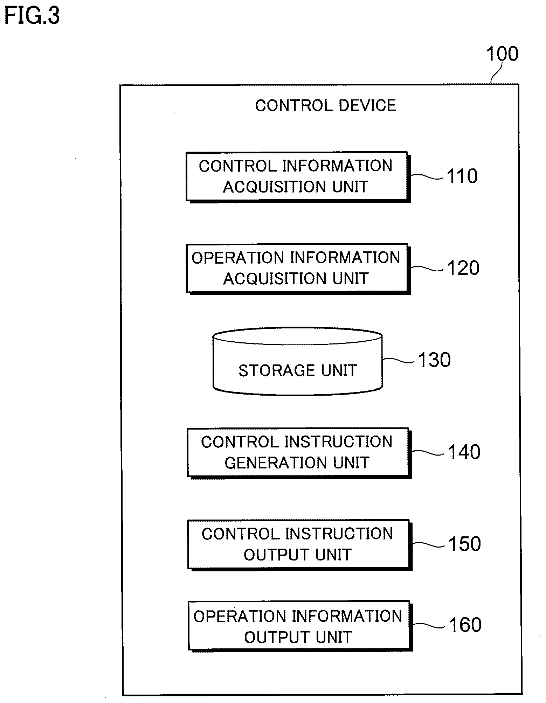

Fig. 3 is a diagram illustrating a configuration of the control device 100. The control device 100 is implemented as an information processing device connected to the server 300 and the equipment device 200 via a network. The control device 100 may be a device (e.g., an edge server) located close to the equipment device 200 to be controlled, or may be a server (cloud server) constructed on a cloud environment. The control device 100 includes a control information acquisition unit 110, an operation information acquisition unit 120, a storage unit 130, a control instruction generation unit 140, a control instruction output unit 150, and an operation information output unit 160.

The control information acquisition unit 110 acquires control information of the equipment device 200 from the server 300. The control information acquired by the control information acquisition unit 110 includes, as control information for a certain time period, general control information acquired before the start of the time period and individual control information acquired during the time period. The general control information includes information on a limit value of average power used that is set for each consumer. The individual control information includes information on a new limit value for adjusting the limit value included in the general control information for the current time period.

The operation information acquisition unit 120 acquires operation information of the equipment device 200 to be controlled by the control device 100. The operation information acquired by the operation information acquisition unit 120 includes a wide variety of information related to the operation of the equipment device 200. The operation information includes, for example, information indicating an operation state such as an operating rate or a continuous operating time of the equipment device 200. The operation information may include various kinds of information considered to affect the operation of the equipment device 200, such as a time of day in which the equipment device 200 is operated, and operation on weekdays or weekends. The operation information acquisition unit 120 may further acquire information on an environment in which the equipment device 200 is installed, such as temperature and humidity. These pieces of information can be acquired by various existing methods in accordance with the type of information. For example, the information may be acquired from the equipment device 200 itself or from various sensor devices or the like. Information on a date and time is obtained by, for example, a clock function or a calendar function of the control device 100.

The storage unit 130 stores various kinds of information acquired by the control information acquisition unit 110 and the operation information acquisition unit 120. The control information acquired by the control information acquisition unit 110 is used to control the equipment device 200. In the control information, the general control information for each time period is stored in the storage unit 130 before the start of the time period in which control is performed using each piece of general control information. The operation information of the equipment device 200, which is acquired by the operation information acquisition unit 120, is transmitted to the server 300 at a predetermined timing and is used for prediction by the first prediction unit 320 and the second prediction unit 350 of the server 300.

In a case where the server 300 transmits general control information for a time period based on each predetermined unit period before the start of the unit period, the general control information is acquired by the control information acquisition unit 110 and stored in the storage unit 130 before the start of the unit period. For example, in a case where the unit period is a period corresponding to one time period, general control information for one time period is stored in the storage unit 130 before the start of the time period in which control is performed using the general control information. In a case where the unit period is a period corresponding to a plurality of time periods, general control information for the plurality of time periods is stored in the storage unit 130 before the start of the first time period in which control is performed using the general control information. Specifically, for example, in a case where the unit period is one day, general control information for 48 time periods of a day is stored in the storage unit 130 until the previous day.

The control instruction generation unit 140 generates a control instruction for controlling the equipment device 200, based on the control information acquired by the control information acquisition unit 110. The control instruction generation unit 140 generates a control instruction for operating the equipment device 200 so that the average power used by an equipment device 200 of each consumer over each time period does not exceed the limit value set for the consumer for the time period. When a consumer has a plurality of equipment devices 200, a control instruction is generated for each time period so that the total value of average power used by all of the equipment devices 200 of the consumer does not exceed the limit value for the corresponding time period. In this case, the method by which the consumer allocates power to the plurality of equipment devices 200 thereof so that the limit value set for the consumer is not exceeded is not particularly limited. For example, power may be equally allocated according to the types, device scales, or the like of the equipment devices 200. Alternatively, sufficient power may be allocated a specific equipment device 200, and the remaining power may be allocated to the other equipment devices 200. Alternatively, in a certain time period, some of the equipment devices 200 are not operated, and only other equipment devices 200 may use power. Alternatively, the control instruction generation unit 140 may generate a control instruction in consideration of the operation information of the equipment devices 200 acquired by the operation information acquisition unit 120. In the control information acquired by the control information acquisition unit 110, the control instruction generated by the control instruction generation unit 140 based on the general control information is held in the storage unit 130.

The control instruction output unit 150 reads the control instruction generated by the control instruction generation unit 140 based on the general control information in the control information acquired by the control information acquisition unit 110 from the storage unit 130 during a time period in which control is performed using the general control information, and transmits the control instruction to the equipment device 200 to be controlled. Further, the control instruction output unit 150 immediately transmits the control instruction generated by the control instruction generation unit 140 based on the individual control information in the control information acquired by the control information acquisition unit 110 to the equipment device 200 to be controlled.

The operation information output unit 160 reads the operation information of the equipment device 200, which is acquired by the operation information acquisition unit 120 and held in the storage unit 130, from the storage unit 130 in accordance with a predetermined condition, and transmits the operation information to the server 300. The operation information may be read and transmitted in response to a request from the server 300 or may be read and transmitted periodically at a predetermined time of a day or the like.

<Hardware Configuration of Control Device 100 and Server 300>

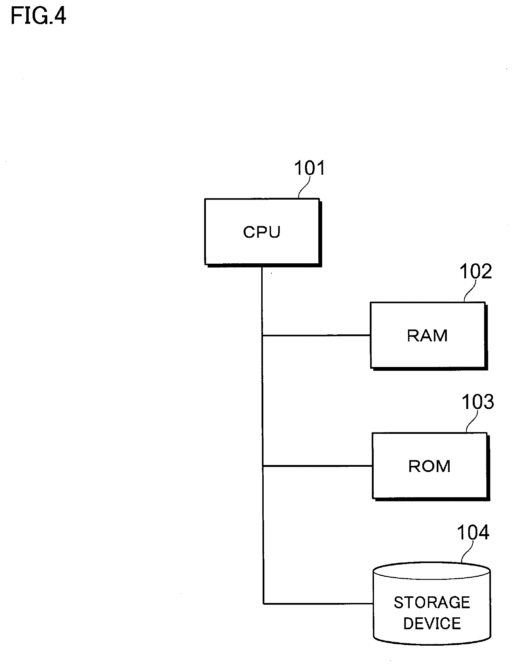

Fig. 4 is a diagram illustrating an example hardware configuration of the control device 100 and the server 300. The control device 100 and the server 300 are implemented by a computer, for example. The control device 100 and the server 300 may be implemented as servers constructed in a cloud environment. Even in this case, the control device 100 and the server 300 are configured as virtual systems using system resources of physical computers, as illustrated in Fig. 4, on a network.

The computer that implements the control device 100 includes an arithmetic unit, namely, a CPU (Central Processing Unit) 101, and storage units, namely, a RAM (Random Access Memory) 102, a ROM (Read Only Memory) 103, and a storage device 104. The RAM 102 is a main storage device (main memory) and is used as a working memory for the CPU 101 to perform arithmetic processing. The ROM 103 holds programs and data such as set values prepared in advance. The CPU 101 can directly read the programs and the data from the ROM 103 to execute processing. The storage device 104 is a unit that stores programs and data. The storage device 104 stores a program. The CPU 101 reads the program stored in the storage device 104 into the main storage device and executes the program. The storage device 104 further stores and saves a result of processing by the CPU 101. Examples of the storage device 104 include a magnetic disk device and an SSD (Solid State Drive).

When the control device 100 is implemented by the computer illustrated in Fig. 4, the functions of the control information acquisition unit 110, the operation information acquisition unit 120, the control instruction generation unit 140, the control instruction output unit 150, and the operation information output unit 160 described with reference to Fig. 3 are implemented by, for example, the CPU 101 executing a program. The storage unit 130 is implemented by the RAM 102 or the storage device 104, for example. When the server 300 is implemented by the computer illustrated in Fig. 4, the functions of the group management unit 310, the first prediction unit 320, the limit value setting unit 330, the control information generation unit 340, the second prediction unit 350, the actual result information acquisition unit 360, the limit value adjustment unit 370, and the transmission control unit 380 described with reference to Fig. 2 are implemented by, for example, the CPU 101 executing a program. The example configuration illustrated in Fig. 4 is merely an example in which the control device 100 is implemented by a computer.

<Configuration of Equipment Device 200>

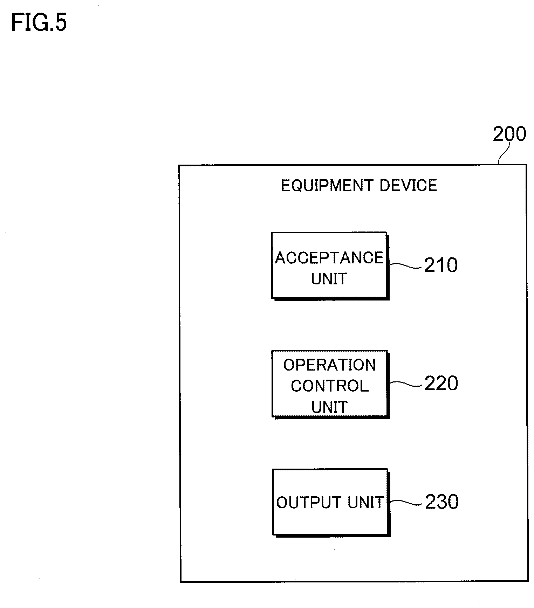

Fig. 5 is a diagram illustrating a configuration of the equipment device 200. The equipment device 200 includes an acceptance unit 210, an operation control unit 220, and an output unit 230. The equipment device 200 includes a mechanism or a device that operates to implement the functions of the equipment device 200 in accordance with the type. For example, when the equipment device 200 is an air conditioner, the equipment device 200 includes an indoor unit, an outdoor unit, and the like. When the equipment device 200 is a piece of lighting equipment, the equipment device 200 includes a lighting fixture, a control switch, and the like. Such mechanisms and the like have various types and modes that vary depending on the type of the equipment device 200, and the types and modes are not illustrated.

The acceptance unit 210 accepts a control instruction, which is output from the control device 100, via a network by using a network interface (not illustrated).

The operation control unit 220 controls the operation of a mechanism or a device disposed in the equipment device 200 in accordance with the control instruction accepted by the acceptance unit 210. Specifically, for example, when the equipment device 200 is an air conditioner, the acceptance unit 210 accepts information specifying a set temperature as a control instruction, and the operation control unit 220 controls the operation of the indoor unit and the outdoor unit so that the accepted set temperature is achieved. While an example of control related to temperature setting has been given, control based on a control instruction by the operation control unit 220 can be applied to various types of control (e.g., control of humidity or gas components) related to gas that can be controlled by the air conditioner. Also in any equipment device 200 other than the air conditioner, the operation control unit 220 executes control corresponding to the type of the equipment device 200 in accordance with the control instruction accepted from the control device 100.

The output unit 230 outputs information related to the operation state of the equipment device 200 to the control device 100 via a network by using the network interface (not illustrated).

The acceptance unit 210, the operation control unit 220, and the output unit 230 are implemented by a computer, for example. The computer that implements the operation control unit 220 may have the configuration described with reference to Fig. 4. In this case, the respective functions of the acceptance unit 210, the operation control unit 220, and the output unit 230 are implemented by, for example, the CPU 101 illustrated in Fig. 4 executing a program. The respective functions of the acceptance unit 210, the operation control unit 220, and the output unit 230 may be implemented by dedicated hardware. The functions may be implemented by, for example, an ASIC (Application Specific Integrated Circuit), an FPGA (Field-Programmable Gate Array), or any other circuit. A function implemented by the CPU 101 executing a program (software) and a function implemented by dedicated hardware may be combined to implement the acceptance unit 210, the operation control unit 220, and the output unit 230.

<Example of Set Limit Values>

In the present embodiment, a group including a plurality of consumers is a contract target, and contract power is set based on average power used per group per time period. The average power used per group per time period will further be described with reference to the drawings.

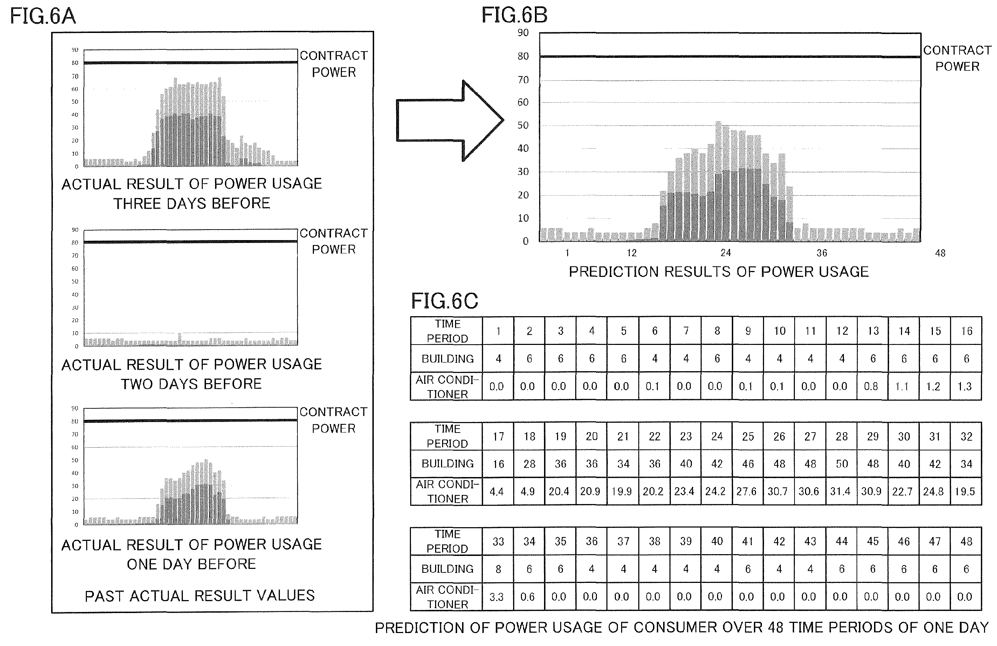

Fig. 6 includes diagrams illustrating an example of predicted power usage of one consumer. Fig. 6(A) is a diagram illustrating an example of actual results of power usage in the past, Fig. 6(B) is a diagram illustrating prediction results of power usage over a day, and Fig. 6(C) is a diagram illustrating an example of predicted values for respective time periods in the prediction results. In the graphs in Figs. 6(A) and 6(B), the horizontal axis represents time periods (48 time periods) of a day (24 hours), and the vertical axis represents average power (kW) used per time period. The graphs in Figs. 6(A) and 6(B) and the tables in Fig. 6(C) present the actual results and prediction results of average power used by the equipment devices 200 over the respective time periods of a day. Further, Figs. 6(A) to 6(C) illustrate, for the equipment devices 200 of one consumer, the actual results and the prediction results of the entire equipment devices 200 possessed by the consumer and the actual results and the prediction results of the air conditioner among the equipment devices 200.

Fig. 6(A) illustrates the actual results of the average power used per time period of three days before (three days before, two days before, and one day before) the day on which the power usage is to be predicted. In the drawings, a graph with a light color indicates the actual results of the entire equipment devices 200, and a graph with a dark color indicates the actual results of the air conditioner. Fig. 6(B) illustrates an example of prediction results of average power used per time period, which are predicted in consideration of the actual results illustrated in Fig. 6(A). Also in Fig. 6(B), as in Fig. 6(A), a graph with a light color indicates the prediction results of the entire equipment devices 200, and a graph with a dark color indicates the prediction results of the air conditioner. In Fig. 6(C), the predicted values of the average power used by the entire equipment devices 200 (in the drawing, illustrated as "building" representing a facility in which the equipment devices 200 are installed) over the respective time periods (the first time period to the 48th time period) of a day and the predicted values of the average power used by the air conditioner among the equipment devices 200 are illustrated in association with each other.

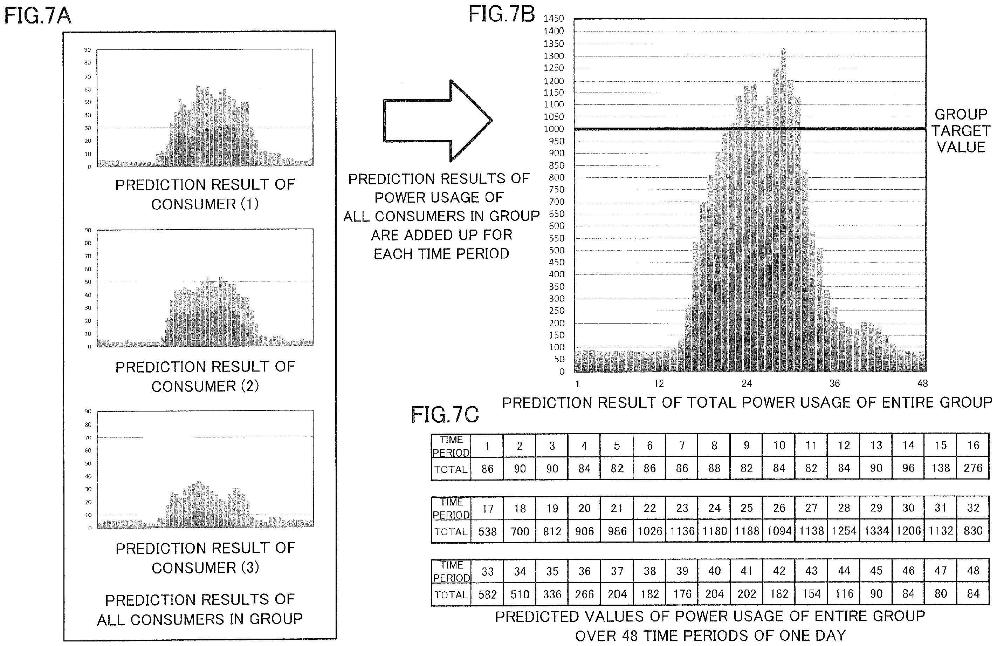

Fig. 7 includes diagrams illustrating an example of adding up predicted power usage of a group including a plurality of consumers. Fig. 7(A) is a diagram illustrating example predictions for the respective consumers included in the group, Fig. 7(B) is a diagram illustrating prediction results of the entire group, and Fig. 7(C) is a diagram illustrating an example of predicted values for respective time periods in the prediction results of the group. In the graphs in Figs. 7(A) and 7(B), the horizontal axis represents time periods (48 time periods) of a day (24 hours), and the vertical axis represents average power (kW) used per time period. The graphs in Figs. 7(A) and 7(B) and the tables in Fig. 7(C) present the prediction results of average power used by the consumers and the group over the respective time periods of a day. The prediction results of average power used by the entire equipment devices 200 of each consumer are referred to as prediction results of average power used by the consumer or prediction results of the consumer.

Fig. 7(A) illustrates prediction results of average power used per consumer in the group per time period. In Fig. 7(A), only the prediction results of three consumers (consumers (1) to (3)) among the plurality of consumers included in the group are illustrated, and the prediction results of the others are omitted. In Fig. 7(A), a graph with a light color indicates the prediction results of the entire equipment devices 200, and a graph with a dark color indicates the prediction results of the air conditioner. Fig. 7(B) illustrates prediction results of average power used by the entire group including the three consumers illustrated in Fig. 7(A) over the respective time periods. In Fig. 7(B), segments (colors) of the graph for each time period indicate that the predicted values of the average power used by the consumers included in the group are added up for the corresponding time period. Fig. 7(C) illustrates total values of the prediction results of average power used per consumer over the respective time periods (the first time period to the 48th time period) of a day.

It is assumed that the group has a target power (denoted by "target value" in the drawing) of 1000 kW. Referring to Figs. 7(B) and 7(C), the predicted values of the average power used by the entire group over the 22nd time period to the 31st time period exceed the target power. Accordingly, the limit value for the power usage of each of the consumers included in the group is set such that, during at least these time periods, the predicted values of the average power used by the entire group do not exceed the target power. The limit value itself of each consumer may be set not only for a time period in which the predicted value of the entire group exceeds the target power but also for another time period in which the predicted value of the entire group does not exceed the target power.

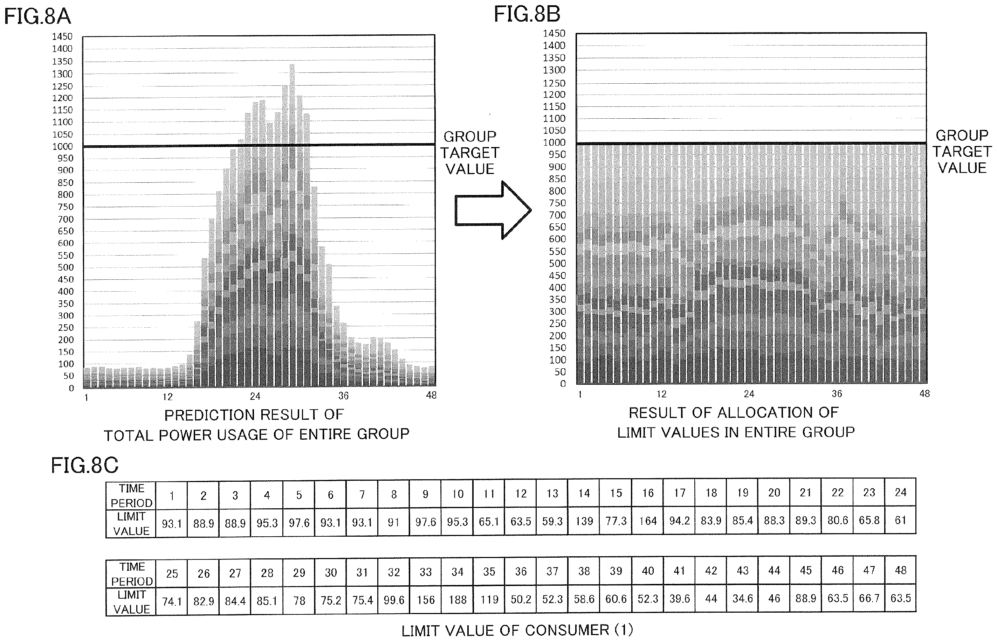

Fig. 8 includes diagrams illustrating an example of limit values set for respective consumers included in a group. Fig. 8(A) is a diagram illustrating an example of prediction of average power used by the group per time period, Fig. 8(B) is a diagram illustrating a result of allocation of limit values to the consumers included in the group, and Fig. 8(C) is a diagram illustrating an example of limit values allocated to one of the consumers included in the group for the respective time periods. In the graphs in Figs. 8(A) and 8(B), the horizontal axis represents time periods (48 time periods) of a day (24 hours), and the vertical axis represents average power (kW) used per time period.

Fig. 8(A) illustrates prediction results of average power used per consumer in the group per time period. The illustrated graph is the same as the graph illustrated in Fig. 7(B). Fig. 8(B) illustrates an example of the result of allocation of limit values set for the consumers included in the group when the average power used by the group for each time period is made equal to the target power. In Fig. 8(B), segments (colors) of the graph for each time period indicate the proportions of the limit values allocated to the respective consumers (power usage available to the consumers) for the corresponding time period. In principle, the proportions of the limit values allocated to the respective consumers for each time period are the proportions of the predicted values of the average power used by the respective consumers in the prediction of the average power used by the group illustrated in Fig. 8(A). Depending on the predicted value of each consumer, a lower limit, instead of the proportion of the predicted value of the average power used, may be assigned as the limit value. Fig. 8(C) illustrates the limit values for the respective time periods (the first time period to the 48th time period) of a day, which are allocated to one consumer (consumer (1)) among the consumers included in the group.

<Example Prediction of Average Power Used in Facility based on Average Power Used by Equipment Devices 200>

An example of predicted average power used in a facility based on the average power used by the equipment devices 200 installed in the facility will be described. Here, the average power used in a facility is predicted based on the average power used by some equipment devices 200 among the equipment devices 200 installed in the facility. The power usage of the facility is the total power usage of the equipment devices 200 installed in the facility. Accordingly, the power usage of some of the equipment devices 200 may have a correlation with the power usage of the facility. For example, the power usage of an equipment device 200 having a particularly large amount of power used among the equipment devices 200 installed in the facility is considered to have a strong correlation with the power usage of the facility. Examples of the equipment device 200 having a large amount of power used include an air conditioner.

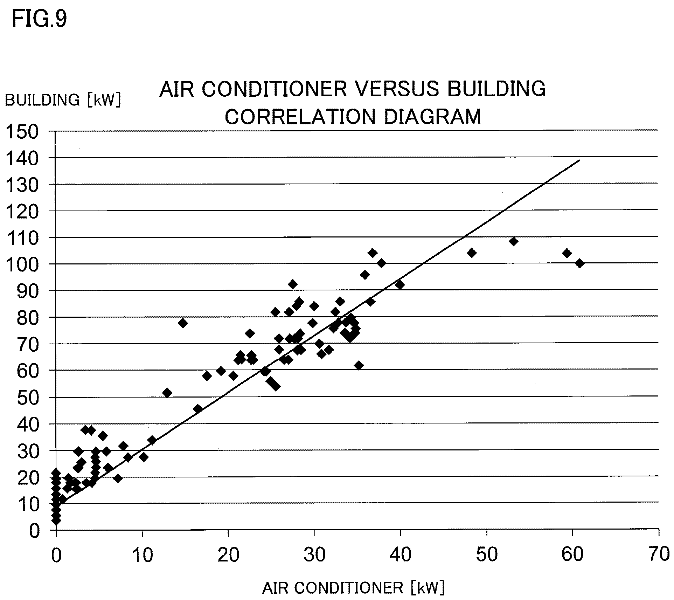

Fig. 9 is a diagram illustrating an example of a correlation between power usage of a facility and power usage of an air conditioner. In the example illustrated in Fig. 9, the power usage of the facility (in the drawing, represented as "building" as an example of the facility) and the power usage of the air conditioner have the illustrated correlation. The correlation is represented by the following linear regression equation.

$$y = 2.1153x + 9.2001$$

The coefficient of determination $R^2$ is given by

$$R^2 = 0.9337.$$

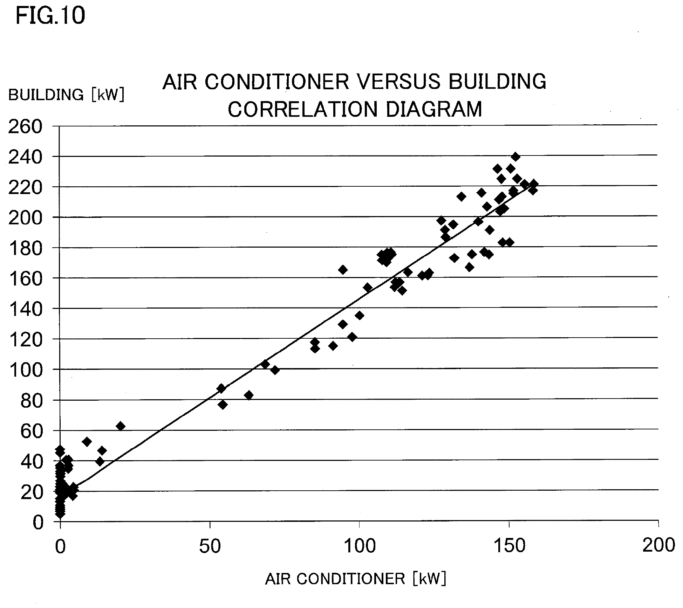

Fig. 10 is a diagram illustrating another example of a correlation between power usage of a facility and power usage of an air conditioner. In the example illustrated in Fig. 10, the power usage of the facility (in the drawing, represented as "building" as an example of the facility) and the power usage of the air conditioner have the illustrated correlation. The correlation is represented by the following linear regression equation.

$$y = 1.2972x + 16.968$$

The coefficient of determination $R^2$ is given by

$$R^2 = 0.9704.$$

As illustrated in Figs. 9 and 10, if there is a correlation between the power usage of the facility and the power usage of the air conditioner, which is an equipment device 200 installed in the facility, the power usage of the air conditioner can be identified to estimate the power usage of the facility. Consideration will be given to a case where, for example, if the correlation illustrated in Fig. 10 is present, the average power used by the air conditioner over a certain time period is predicted to be 107 kW. In the above linear regression equation, x = 107 holds. Thus, the following is satisfied.

$$y = 1.2972 \times 107 + 16.968 = 155.7684 \approx 156$$

The predicted value of the average power used in the facility for this time period is predicted to be 156 kW.

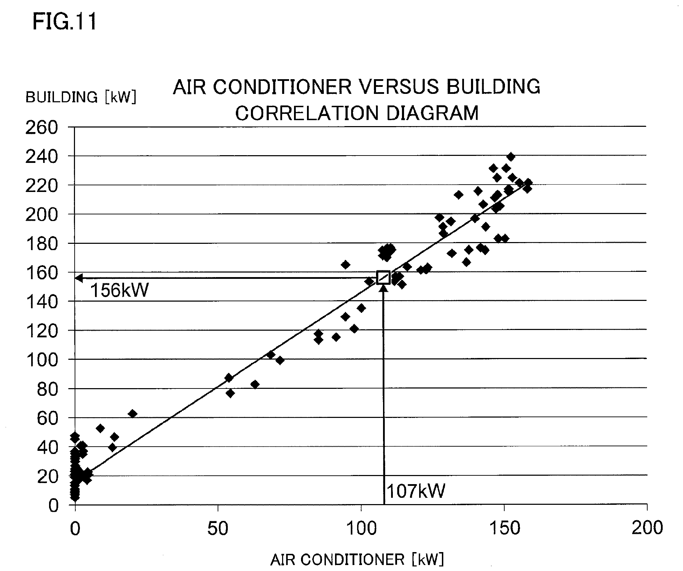

Fig. 11 is a diagram illustrating a method for predicting, in the example of the correlation illustrated in Fig. 10, the power usage of the facility based on the power usage of the air conditioner. As illustrated in Fig. 11, if the power usage of the facility and the power usage of the air conditioner installed in the facility have the correlation illustrated in Fig. 10, the average power used by the air conditioner over a certain time period is predicted. Then, this prediction result is used to estimate the average power used in the facility over the corresponding time period by the linear regression equation.

As described above, according to the present embodiment, it is possible to predict the average power used in each facility for each time period, based on the predicted value of the average power used by the equipment devices 200 installed in the facility and the actual results in the past. It is also possible to predict the total power usage of all of the facilities belonging to the group for each time period, based on the predicted value of the average power used in each facility and the actual results in the past. It is possible to control the power usage of the equipment devices 200 installed in each facility such that this total power usage does not exceed the threshold based on the target power, which is set for the group.

While an embodiment has been described above, the technical scope of the present disclosure is not limited to the embodiment described above. For example, in the embodiment described above, a limit value is set before the start of the time period during which control based on control information is performed, and the limit value can be adjusted after the start of the time period. Alternatively, instead of a limit value being set before the start of the time period, a limit value may be set in accordance with the operating status of the equipment devices 200 within the time period. In the embodiment described above, the server 300 adjusts the limit value after the start of the time period. Alternatively, the control device 100 may adjust the limit value. In this case, when a plurality of control devices 100 control the equipment devices 200 of all of the consumers included in the group, the control devices 100 may exchange information on the operating status of the equipment devices 200 and adjust the limit values in accordance with the obtained information.

In the embodiment described above, the air conditioner is used as an equipment device 200 to be used for the prediction of the power usage of the facility. However, the equipment device 200 to be used for the prediction may be any equipment device 200 having a strong correlation with the power usage of the facility, and is not limited to the air conditioner. Further, among the equipment devices 200 installed in the facility, a plurality of specific equipment devices 200 may be used in combination to predict the power usage of the facility, based on the power usage of the plurality of equipment devices 200. Alternatively, the power usage of the facility may be predicted based on the power usage of different equipment devices 200 according to the season, the time period to be used for prediction, or the like. Further, the correlation between the power usage of the facility and the power usage of the equipment devices 200 is not limited to the linear regression equation exemplified above, and a correlation based on a quadratic equation or a polynomial may be used according to the characteristics of the equipment devices 200. Various modifications and substitutions of configurations that are made without departing from the scope of the technical idea of the present disclosure are included in the present disclosure.

Here, the embodiment described above may be implemented as follows. A power control system of the present disclosure is a power control system for performing power control such that a total power usage of a plurality of facilities satisfies a predetermined power usage condition, the power control system including an actual result information acquisition unit 360 that acquires information on power usages by equipment devices 200 installed in the facilities; a first prediction unit 320 that predicts power usages of the facilities in which the equipment devices 200 are installed, based on the information on the power usages by the equipment devices 200; and a control information generation unit 340 that controls the total power usage of the plurality of facilities, based on the power usages of the facilities predicted by the first prediction unit 320.

This configuration makes it possible to control the power usage by a plurality of facilities such that information related to the power usage is acquired from equipment devices 200 and the power usage per equipment device 200 is accurately predicted based on the acquired information.

The first prediction unit 320 may predict the power usages of the facilities, based on, in addition to a power usage by each of the equipment devices 200 installed in the facilities, an actual result of the power usages of the facilities over a past specific period.

This configuration makes it possible to accurately control the power usage of the plurality of facilities, based on the actual result of the power usage per facility over a past specific period.

Further, the first prediction unit 320 may predict the total power usage of the plurality of facilities, based on the power usages of the facilities predicted by the first prediction unit 320, and the control information generation unit 340 may set a limit value for a power usage of each of the plurality of facilities based on a prediction result of the total power usage, and control each equipment device 200 in each facility such that the set limit value is not exceeded.

This configuration makes it possible to appropriately allocate power usage to each facility while performing control such that the total power usage of a plurality of facilities belonging to a group does not exceed the contract power of the group.

Further, when a prediction result of a power usage of at least one facility among the power usages of the facilities predicted by the first prediction unit 320 is lower than a predetermined lower-limit threshold, the control information generation unit 340 may control load of a facility for which a prediction result of a power usage is predicted to be lower than the lower-limit threshold, such that the power usage of the facility is equal to or higher than a predetermined lower limit.

This configuration ensures that a facility to which less power is set to be allocated for a certain time period when a limit value is set by a specific method can use power over the time period.

Further, when the total power usage of the plurality of facilities predicted by the first prediction unit 320 is smaller than a predetermined threshold by a certain amount or more, the control information generation unit 340 may control one or a plurality of the equipment devices 200 installed in one or a plurality of the facilities such that a power usage is higher than a value predicted by the first prediction unit 320 within a range in which the total power usage of the plurality of facilities does not exceed the threshold.

With this configuration, power more than predicted power usage can be used in a facility, according to a condition, even when a limit value for power usage is set for each facility.

Further, the first prediction unit 320 may predict a power usage of a facility based on a power usage of some equipment devices 200 having a correlation with a power usage of an entire facility among the equipment devices 200 installed in the facilities.

This configuration makes it possible to predict the power usage of a facility, based on the power usage of a specific equipment device 200, and to control the power usage of each equipment device 200 installed in the facility.

A program of the present disclosure is a program for causing a computer that controls a power control system for performing power control such that a total power usage of a plurality of facilities satisfies a predetermined power usage condition, to function as an actual result information acquisition unit 360 that acquires information on power usages by equipment devices 200 installed in the facilities; a first prediction unit 320 that predicts power usages of the facilities in which the equipment devices 200 are installed, based on the information on the power usages by the equipment devices 200; and a control information generation unit 340 that controls the total power usage of the plurality of facilities, based on the power usages of the facilities predicted by the first prediction unit 320.

A computer having installed therein the program makes it possible to accurately control the power usage of the plurality of facilities, based on the actual result of the power usage per facility over a past specific period. Reference Signs List

100 ... control device, 110 ... control information acquisition unit, 120 ... operation information acquisition unit, 130 ... storage unit, 140 ... control instruction generation unit, 150 ... control instruction output unit, 160 ... operation information output unit, 200 ... equipment device, 210 ... acceptance unit, 220 ... operation control unit, 230 ... output unit, 300 ... server, 310 ... group management unit, 320 ... first prediction unit, 330 ... limit value setting unit, 340 ... control information generation unit, 350 ... second prediction unit, 360 ... actual result information acquisition unit, 370 ... limit value adjustment unit, 380 ... transmission control unit

## Claims

1. A power control system for performing power control such that a total power usage of a plurality of facilities satisfies a predetermined power usage condition, the power control system comprising:

   an acquisition unit (360) that acquires information on power usages by equipment devices (200) installed in the facilities; and
   a prediction unit (320) that

   predicts power usages of the facilities in which the equipment devices (200) are installed, based on the information on the power usages by the equipment devices (200), and
   predicts the total power usage of the plurality of facilities, based on the predicted power usages of the facilities;

   **characterized by**
   a control unit (340) that

   controls the total power usage of the plurality of facilities, based on the power usages of the facilities predicted by the prediction unit (320),
   sets a limit value for a power usage of each of the plurality of facilities based on a prediction result of the total power usage, and
   controls each equipment device (200) in each facility such that the set limit value is not exceeded.

2. The power control system according to claim 1, wherein the prediction unit (320) predicts the power usages of the facilities, based on, in addition to a power usage by each of the equipment devices (200) installed in the facilities, an actual result of the power usages of the facilities over a past specific period.

3. The power control system according to claim 1 or 2, wherein when a prediction result of a power usage of at least one facility among the power usages of the facilities predicted by the prediction unit (320) is lower than a predetermined lower-limit threshold, the control unit (340) controls a load of a facility for which a prediction result of a power usage is predicted to be lower than the lower-limit threshold, such that the power usage of the facility is equal to or higher than a predetermined lower limit.

4. The power control system according to claim 1, wherein when the total power usage of the plurality of facilities predicted by the prediction unit (320) is smaller than a predetermined threshold by a certain amount or more, the control unit (340) controls one or a plurality of the equipment devices (200) installed in one or a plurality of the facilities such that a power usage is higher than a value predicted by the prediction unit (320) within a range in which the total power usage of the plurality of facilities does not exceed the threshold.

5. The power control system according to any one of claims 1 to 4, wherein the prediction unit (320) predicts a power usage of a facility based on a power usage of some equipment devices (200) having a correlation with a power usage of an entire facility among the equipment devices (200) installed in the facilities.

6. A program for causing a computer that controls a power control system for performing power control such that a total power usage of a plurality of facilities satisfies a predetermined power usage condition, to function as:

   an acquisition unit (360) that acquires information on power usages by equipment devices (200) installed in the facilities; and
   a prediction unit (320) that

   predicts power usages of the facilities in which the equipment devices (200) are installed, based on the information on the power usages by the equipment devices (200), and
   predicts the total power usage of the plurality of facilities, based on the predicted power usages of the facilities;

   **characterized by**
   a control unit (340) that

   controls the total power usage of the plurality of facilities, based on the power usages of the facilities predicted by the prediction unit (320),
   sets a limit value for a power usage of each of the plurality of facilities based on a prediction result of the total power usage, and
   controls each equipment device (200) in each facility such that the set limit value is not exceeded.

**Patentansprüche**

1. Leistungssteuerungssystem zum Durchführen von Leistungssteuerung so, dass ein Gesamtleistungsverbrauch einer Vielzahl von Anlagen eine vorbestimmte Leistungsverbrauchsbedingung erfüllt, wobei das Leistungssteuerungssystem Folgendes umfasst:

   eine Erfassungseinheit (360), die Informationen über Leistungsverbräuche durch in den Anlagen installierte Ausstattungsvorrichtungen (200) erfasst; und
   eine Vorhersageeinheit (320), die

   Leistungsverbräuche der Anlagen, in denen die Ausstattungsvorrichtungen (200) installiert sind, basierend auf den Informationen über die Leistungsverbräuche durch die Ausstattungsvorrichtungen (200) vorhersagt, und
   den Gesamtleistungsverbrauch der Vielzahl von Anlagen basierend auf den vorhergesagten Leistungsverbräuchen der Anlagen vorhersagt;

   **gekennzeichnet durch**
   eine Steuereinheit (340), die

   den Gesamtleistungsverbrauch der Vielzahl von Anlagen basierend auf den durch die Vorhersageeinheit (320) vorhergesagten Leistungsverbräuchen der Anlagen steuert,
   einen Grenzwert für einen Leistungsverbrauch von jeder der Vielzahl von Anlagen basierend auf einem

EP 4 224 670 B1

Vorhersageergebnis des Gesamtleistungsverbrauchs festlegt und
jede Ausstattungsvorrichtung (200) in jeder Anlage so steuert, dass der festgelegte Grenzwert nicht überschritten wird.

**2.** Leistungssteuerungssystem nach Anspruch 1, wobei die Vorhersageeinheit (320) die Leistungsverbräuche der Anlagen zusätzlich zu einem Leistungsverbrauch von jeder der in den Anlagen installierten Ausstattungsvorrichtungen (200) basierend auf einem tatsächlichen Ergebnis der Leistungsverbräuche der Anlagen über eine konkrete Zeitdauer in der Vergangenheit vorhersagt.

**3.** Leistungssteuerungssystem nach Anspruch 1 oder 2, wobei wenn ein Vorhersageergebnis eines Leistungsverbrauchs von mindestens einer Anlage unter den Leistungsverbräuchen der Anlagen, der durch die Vorhersageeinheit (320) vorhergesagt wurde, niedriger ist als ein vorbestimmter unterer Schwellenwert, die Steuereinheit (340) eine Last einer Anlage, für die ein Vorhersageergebnis eines Leistungsverbrauchs als niedriger als ein unterer Schwellenwert vorhergesagt ist, so steuert, dass der Leistungsverbrauch der Anlage gleich hoch oder höher als ein vorbestimmter unterer Grenzwert wird.

**4.** Leistungssteuerungssystem nach Anspruch 1, wobei wenn der Gesamtleistungsverbrauch der Vielzahl von Anlagen, der durch die Vorhersageeinheit (320) vorhergesagt wurde, um ein bestimmtes Ausmaß oder mehr geringer ist als ein vorbestimmter Schwellenwert, die Steuereinheit (340) eine oder eine Vielzahl der in einer oder einer Vielzahl der Anlagen installierten Ausstattungsvorrichtungen (200) so steuert, dass ein Leistungsverbrauch innerhalb eines Bereichs, in dem der Gesamtleistungsverbrauch der Vielzahl von Anlagen den Schwellenwert nicht übersteigt, höher ist als ein durch die Vorhersageeinheit (320) vorhergesagter Wert.

**5.** Leistungssteuerungssystem nach einem der Ansprüche 1 bis 4, wobei die Vorhersageeinheit (320) einen Leistungsverbrauch einer Anlage basierend auf einem Leistungsverbrauch von einigen Ausstattungsvorrichtungen (200) vorhersagt, die eine Korrelation mit einem Leistungsverbrauch einer gesamten Anlage unter den in den Anlagen installierten Ausstattungsvorrichtungen (200) aufweisen.

**6.** Programm zum Bewirken, dass ein Computer, der ein Leistungssteuerungssystem zum Durchführen von Leistungssteuerung so steuert, dass ein Gesamtleistungsverbrauch einer Vielzahl von Anlagen eine vorbestimmte Leistungsverbrauchsbedingung erfüllt, fungiert als:

eine Erfassungseinheit (360), die Informationen über Leistungsverbräuche durch in den Anlagen installierte Ausstattungsvorrichtungen (200) erfasst; und
eine Vorhersageeinheit (320), die

Leistungsverbräuche der Anlagen, in denen die Ausstattungsvorrichtungen (200) installiert sind, basierend auf den Informationen über die Leistungsverbräuche durch die Ausstattungsvorrichtungen (200) vorhersagt, und
den Gesamtleistungsverbrauch der Vielzahl von Anlagen basierend auf den vorhergesagten Leistungsverbräuchen der Anlagen vorhersagt;

**gekennzeichnet durch**
eine Steuereinheit (340), die

den Gesamtleistungsverbrauch der Vielzahl von Anlagen basierend auf den durch die Vorhersageeinheit (320) vorhergesagten Leistungsverbräuchen der Anlagen steuert,
einen Grenzwert für einen Leistungsverbrauch von jeder der Vielzahl von Anlagen basierend auf einem Vorhersageergebnis des Gesamtleistungsverbrauchs festlegt und
jede Ausstattungsvorrichtung (200) in jeder Anlage so steuert, dass der festgelegte Grenzwert nicht überschritten wird.

**Revendications**

**1.** Système de commande d'énergie destiné à mettre en œuvre une commande d'énergie de telle sorte qu'une consommation d'énergie totale d'une pluralité d'installations satisfait à une condition de consommation d'énergie prédéterminée, le système de commande d'énergie comprenant :

une unité d'acquisition (360), qui acquiert des informations relatives à des consommations d'énergie par des dispositifs d'équipement (200) installés dans les installations ; et
une unité de prédiction (320), qui

prédit des consommations d'énergie des installations dans lesquelles les dispositifs d'équipement (200) sont installés, sur la base des informations relatives aux consommations d'énergie par les dispositifs d'équipement (200), et
prédit la consommation d'énergie totale de la pluralité d'installations, sur la base des consommations d'énergie prédites des installations ;

**caractérisé par**
une unité de commande (340), qui

commande la consommation d'énergie totale de la pluralité d'installations, sur la base des consommations d'énergie des installations prédites par l'unité de prédiction (320),
définit une valeur limite pour une consommation d'énergie de chaque installation de la pluralité d'installations sur la base d'un résultat de prédiction de la consommation d'énergie totale, et
commande chaque dispositif d'équipement (200) dans chaque installation de telle sorte que la valeur limite définie ne soit pas dépassée.

2. Système de commande d'énergie selon la revendication 1, dans lequel l'unité de prédiction (320) prédit les consommations d'énergie des installations sur la base, en plus d'une consommation d'énergie par chacun des dispositifs d'équipement (200) installés dans les installations, d'un résultat réel des consommations d'énergie des installations sur une période spécifique passée.

3. Système de commande d'énergie selon la revendication 1 ou la revendication 2, dans lequel lorsqu'un résultat de prédiction d'une consommation d'énergie d'au moins une installation parmi les consommations d'énergie des installations prédites par l'unité de prédiction (320) est inférieur à un seuil de limite inférieure prédéterminé, l'unité de commande (340) commande une charge d'une installation pour laquelle un résultat de prédiction d'une consommation d'énergie est prédit comme étant inférieur au seuil de limite inférieure, de telle sorte que la consommation d'énergie de l'installation soit égale ou supérieure à une limite inférieure prédéterminée.

4. Système de commande d'énergie selon la revendication 1, dans lequel lorsque la consommation d'énergie totale de la pluralité d'installations prédite par l'unité de prédiction (320) est inférieure à un seuil prédéterminé d'une certaine quantité ou plus, l'unité de commande (340) commande un ou une pluralité des dispositifs d'équipement (200) installés dans une ou une pluralité des installations de telle sorte qu'une consommation d'énergie soit supérieure à une valeur prédite par l'unité de prédiction (320) dans une plage où la consommation d'énergie totale de la pluralité d'installations ne dépasse pas le seuil.

5. Système de commande d'énergie selon l'une quelconque des revendications 1 à 4, dans lequel l'unité de prédiction (320) prédit une consommation d'énergie d'une installation sur la base d'une consommation d'énergie de certains des dispositifs d'équipement (200) présentant une corrélation avec une consommation d'énergie de toute une installation parmi les dispositifs d'équipement (200) installés dans les installations.

6. Programme destiné à amener un ordinateur qui commande un système de commande d'énergie à mettre en œuvre une commande d'énergie de telle sorte qu'une consommation d'énergie totale d'une pluralité d'installations satisfait à une condition de consommation d'énergie prédéterminée, pour fonctionner comme :

une unité d'acquisition (360) qui acquiert des informations relatives à des consommations d'énergie par des dispositifs d'équipement (200) installés dans les installations ; et
une unité de prédiction (320) qui

prédit des consommations d'énergie des installations dans lesquelles les dispositifs d'équipement (200) sont installés, sur la base des informations relatives aux consommations d'énergie par les dispositifs d'équipement (200), et
prédit la consommation d'énergie totale de la pluralité d'installations, sur la base des consommations d'énergie prédites des installations ;

**caractérisé par**
une unité de commande (340) qui

commande la consommation d'énergie totale de la pluralité d'installations, sur la base des consommations d'énergie des installations prédites par l'unité de prédiction (320),
définit une valeur limite pour une consommation d'énergie de chaque installation de la pluralité d'installations sur la base d'un résultat de prédiction de la consommation d'énergie totale, et
commande chaque dispositif d'équipement (200) dans chaque installation de telle sorte que la valeur limite définie ne soit pas dépassée.

FIG.1

FIG.2

300

SERVER

| GROUP MANAGEMENT UNIT | ~310 |

| FIRST PREDICTION UNIT | ~320 |

| LIMIT VALUE SETTING UNIT | ~330 |

| CONTROL INFORMATION GENERATION UNIT | ~340 |

| SECOND PREDICTION UNIT | ~350 |

| ACTUAL RESULT INFORMATION ACQUISITION UNIT | ~360 |

| LIMIT VALUE ADJUSTMENT UNIT | ~370 |

| TRANSMISSION CONTROL UNIT | ~380 |

FIG.3

100

CONTROL DEVICE

CONTROL INFORMATION
ACQUISITION UNIT ~110

OPERATION INFORMATION
ACQUISITION UNIT ~120

STORAGE UNIT ~130

CONTROL INSTRUCTION
GENERATION UNIT ~140

CONTROL INSTRUCTION
OUTPUT UNIT ~150

OPERATION INFORMATION
OUTPUT UNIT ~160

FIG.4

FIG.5

200

EQUIPMENT DEVICE

ACCEPTANCE UNIT ~210

OPERATION CONTROL UNIT ~220

OUTPUT UNIT ~230

## FIG.6A

ACTUAL RESULT OF POWER USAGE THREE DAYS BEFORE

ACTUAL RESULT OF POWER USAGE TWO DAYS BEFORE

ACTUAL RESULT OF POWER USAGE ONE DAY BEFORE

PAST ACTUAL RESULT VALUES

## FIG.6B

PREDICTION RESULTS OF POWER USAGE

## FIG.6C

| TIME PERIOD | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| BUILDING | 4 | 6 | 6 | 6 | 6 | 4 | 4 | 6 | 4 | 4 | 4 | 4 | 6 | 6 | 6 | 6 |
| AIR CONDI-TIONER | 0.0 | 0.0 | 0.0 | 0.0 | 0.0 | 0.1 | 0.0 | 0.0 | 0.1 | 0.1 | 0.0 | 0.0 | 0.8 | 1.1 | 1.2 | 1.3 |

| TIME PERIOD | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|
| BUILDING | 16 | 28 | 36 | 36 | 34 | 36 | 40 | 42 | 46 | 48 | 48 | 50 | 48 | 40 | 42 | 34 |
| AIR CONDI-TIONER | 4.4 | 4.9 | 20.4 | 20.9 | 19.9 | 20.2 | 23.4 | 24.2 | 27.6 | 30.7 | 30.6 | 31.4 | 30.9 | 22.7 | 24.8 | 19.5 |

| TIME PERIOD | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|
| BUILDING | 8 | 6 | 6 | 4 | 4 | 4 | 4 | 4 | 6 | 4 | 4 | 6 | 6 | 6 | 6 | 6 |
| AIR CONDI-TIONER | 3.3 | 0.6 | 0.0 | 0.0 | 0.0 | 0.0 | 0.0 | 0.0 | 0.0 | 0.0 | 0.0 | 0.0 | 0.0 | 0.0 | 0.0 | 0.0 |

PREDICTION OF POWER USAGE OF CONSUMER OVER 48 TIME PERIODS OF ONE DAY

# FIG.7A

PREDICTION RESULT OF
CONSUMER (1)

PREDICTION RESULT OF
CONSUMER (2)

PREDICTION RESULT OF
CONSUMER (3)

PREDICTION RESULTS OF
ALL CONSUMERS IN GROUP

PREDICTION RESULTS OF
POWER USAGE OF
ALL CONSUMERS IN GROUP
ARE ADDED UP FOR
EACH TIME PERIOD

# FIG.7B

GROUP
TARGET
VALUE

PREDICTION RESULT OF TOTAL POWER USAGE OF ENTIRE GROUP

# FIG.7C

| TIME PERIOD | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| TOTAL | 86 | 90 | 90 | 84 | 82 | 86 | 86 | 88 | 82 | 84 | 82 | 84 | 90 | 96 | 138 | 276 |

| TIME PERIOD | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|
| TOTAL | 538 | 700 | 812 | 906 | 986 | 1026 | 1136 | 1180 | 1188 | 1094 | 1138 | 1254 | 1334 | 1206 | 1132 | 830 |

| TIME PERIOD | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|
| TOTAL | 582 | 510 | 336 | 266 | 204 | 182 | 176 | 204 | 202 | 182 | 154 | 116 | 90 | 84 | 80 | 84 |

PREDICTED VALUES OF POWER USAGE OF ENTIRE GROUP
OVER 48 TIME PERIODS OF ONE DAY

EP 4 224 670 B1

## FIG.8A

GROUP TARGET VALUE

PREDICTION RESULT OF
TOTAL POWER USAGE OF ENTIRE GROUP

## FIG.8B

GROUP TARGET VALUE

RESULT OF ALLOCATION OF
LIMIT VALUES IN ENTIRE GROUP

## FIG.8C

| TIME PERIOD | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| LIMIT VALUE | 93.1 | 88.9 | 88.9 | 95.3 | 97.6 | 93.1 | 93.1 | 91 | 97.6 | 95.3 | 65.1 | 63.5 | 59.3 | 139 | 77.3 | 164 | 94.2 | 83.9 | 85.4 | 88.3 | 89.3 | 80.6 | 65.8 | 61 |

| TIME PERIOD | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|---|---|---|---|---|---|---|
| LIMIT VALUE | 74.1 | 82.9 | 84.4 | 85.1 | 78 | 75.2 | 75.4 | 99.6 | 156 | 188 | 119 | 50.2 | 52.3 | 58.6 | 60.6 | 52.3 | 39.6 | 44 | 34.6 | 46 | 88.9 | 63.5 | 66.7 | 63.5 |

LIMIT VALUE OF CONSUMER (1)

## FIG.9

AIR CONDITIONER VERSUS BUILDING
CORRELATION DIAGRAM

BUILDING [kW]

AIR CONDITIONER [kW]

FIG.10

AIR CONDITIONER VERSUS BUILDING CORRELATION DIAGRAM

BUILDING [kW]

AIR CONDITIONER [kW]

# FIG.11

AIR CONDITIONER VERSUS BUILDING
CORRELATION DIAGRAM

BUILDING [kW]

156kW

107kW

AIR CONDITIONER [kW]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019030087 A
- US 20170070089 A1
- US 20190155227 A1